# EUROPEAN PATENT SPECIFICATION

(11) **EP 3 427 363 B1**
(45) Date of publication and mention of the grant of the patent: **14.10.2020**
(21) Application number: 17711317.2
(22) Date of filing: 30.01.2017
(51) Int. Cl.: H02J 13/00, H02B 1/052

(54) **ADDRESSABLE MODULAR ELECTRIC APPARATUS FOR THE CONTROL AND/OR THE DISTRIBUTION OF ELECTRIC POWER**
ADRESSIERBARE MODULARE ELEKTRISCHE VORRICHTUNG ZUR STEUERUNG UND/ODER VERTEILUNG ELEKTRISCHER ENERGIE
APPAREIL ÉLECTRIQUE MODULAIRE ADRESSABLE POUR LA COMMANDE ET/OU LA DISTRIBUTION D'ÉNERGIE ÉLECTRIQUE

(30) Priority: 09.03.2016 IT UA20161496
(43) Date of publication of application: 16.01.2019
(73) Proprietor: BTICINO S.P.A., 21100 Varese (VA) (IT)
(72) Inventor: SCALVINI, Michele, I-21100 Varese (IT); GUGLIELMO, Donato, I-21100 Varese (IT); CURTOLO, Mirko, I-21100 Varese (IT); GALLI, Daniele, I-21100 Varese (IT); PEDUTO, Francesco, I-21100 Varese (IT)
(74) Representative: Carangelo, Pierluigi
(86) International application number: PCT/IB2017/050480
(87) International publication number: WO 2017/153854

(56) References cited:
- WO-A1-2012/109005
- US-A- 5 455 760
- US-A- 5 705 862
- US-B1- 6 484 215

## Description

### SCOPE OF THE INVENTION

The present invention relates to the technical field of modular electrical apparatuses for the control and/or distribution of electric power and concerns in particular an addressable modular electrical apparatus for the control and/or the distribution of electric power.

### STATE OF THE ART

Modular systems have long been known of for the control and/or the distribution of electric power in which a plurality of modular electrical apparatuses are installed alongside one another on a mounting rail, for example housed inside an electrical cabinet. For the attachment of the electrical modular apparatuses to the mounting rail, it is known of to provide on a rear face of the housing of the electrical apparatuses a housing recess adapted to partially receive the mounting rail. The mounting rail is generally a bar made of a metal profile, and usually has a hat profile, including two longitudinal fastening bands to which it is possible to hook the modular electrical apparatuses, for example in a removable manner.

With the passage of time, the aforesaid modular systems for the control and/or distribution of electric power have undergone a continual evolution up to allowing an interconnection to be made for the exchange of data and/or signals between the modular electrical apparatuses and/or between the modular electrical apparatuses and a control centre, such as a remote control centre. To this end, for example, modular systems have been developed for the control and/or the distribution of electric power in which inside the mounting rail a shared interconnection bus is provided adapted to provide the electrical apparatuses with data connection functions to other electrical apparatuses and/or to a control centre.

Patent application US2013/294035A1 describes a known system which provides for the housing of a T-bus connector inside the mounting rail.

Document DE202014100115U1 describes a modular system in which the housing of a communication bus is provided for inside a mounting rail for modular electrical apparatuses.

The modular systems of the prior art have insufficient performance as regards flexibility and simplicity of installation and configuration. In particular, in the modular systems of the prior art the attribution of addresses to the modular electrical apparatuses is relatively complex. For modular systems comprising a large number of electrical apparatuses connected to the same local interconnection bus a unique address must be assigned to each modular electrical apparatus, for example via a configuration software, which implies the attribution and management of a large number of different addresses.

The need is felt to provide modular electrical apparatuses with improved performance in terms of simplicity and flexibility of installation and configuration especially as regards the attribution of addresses for data communication on an interconnection bus. The patent document US5455760 A is here identified as describing an energy management lead panel with circuit breaker and microcomputer, having load panel enclosure with circuit breakers having manually settable bits for recognition and control by microcomputer via interface.

The purpose of the present invention is to provide a modular electrical apparatus for the control and/or the distribution of electric power that meets the need described above.

Such purpose is achieved by means of a modular electrical apparatus as generally defined in claim 1. Preferred and advantageous embodiments of the aforesaid apparatus are defined in the appended dependent claims.

The invention will be clearer to understand from the following detailed description of its particular embodiments, made by way of non-limiting examples with reference to the appended drawings, briefly described in the following paragraph.

### BRIEF DESCRIPTION OF THE DRAWINGS

Figure 1 shows a front plan view of an example of a modular system for the control and/or the distribution of electric power comprising a plurality of modular electrical apparatuses and two mounting rails, in which the modular electrical apparatuses are shown attached to the mounting rails.
Figure 2 shows a side view of a modular electrical apparatus hooked to a mounting rail.
Figure 3 shows a perspective view in which a portion of the rear face of the modular electric apparatus in Figure 2 is visible.
Figure 4 shows a plan view in which a portion of a side face of the modular electrical apparatus 2 is visible.
Figure 5 shows a perspective view in which a portion of a lower face of the modular electrical apparatus 2 is visible.
Figure 6 shows a simplified electric block diagram of the modular electrical apparatus in figure 2.
Figure 7 shows a perspective view of an enlarged part of a mounting rail.
Figure 8 shows a perspective view from above of an enlarged part of the modular electrical apparatus in figure 2.
Figure 9 shows a perspective view from above of another modular electrical apparatus of the system in figure 1.
Figure 10 shows a view of an enlarged part of the electrical apparatus in figure 9.

### DETAILED DESCRIPTION

With reference to the appended drawings, reference numeral 1 globally denotes a modular system for the control and/or distribution of electric power comprising two mounting rails 2, 2' and a plurality of modular electrical apparatuses 3-9 hooked to the mounting rails 2, 2', for example hooked in a removable manner to the mounting rails 2, 2'. For example, the aforementioned modular system 1 for the control and/or distribution of electric power is installed inside an electric switchboard. In the present detailed description, the provision of two mounting rails 2,2' represents a mere example, in that in the modular system 1 there could be only one mounting rail or there could be more than two mounting rails. Henceforth, the mounting rail 2 will also be referred to as the upper mounting rail 2 and the mounting rail 2' will also be indicated as the lower mounting rail 2'.

A first plurality of modular electrical apparatuses 3-9 is fixed to the upper mounting rail 2 and comprises, for example, a modular three-phase circuit breaker 3, a modular single-phase circuit breaker 8 and one or more auxiliary modular electrical apparatuses 4-6,7,9 associated with the modular circuit breakers 3, 8 and adapted to provide said modular circuit breakers 3,8 with additional functions compared to the basic functions of said modular switches. The latter is represented by the ability to connect and disconnect from each other selectively, a power network, such as an electric power distribution network, and a load network. Some non-limiting examples of possible auxiliary modular electrical apparatuses 4-6,7,9 are: measuring apparatuses which perform voltage and/or current measurements, automatic control apparatuses adapted to control the modular circuit breakers 3, 8 to turn them on/off, apparatuses adapted to detect whether an associated modular circuit breakers is on/off, apparatuses adapted to remotely communicate acquired information about the status of the modular circuit breakers (such as, for example, one-way or two-way communication interface devices), apparatuses with a voltage regulator for powering the auxiliary modular electrical apparatuses starting from the voltage of the electric power distribution network, auxiliary modular electrical apparatuses comprising a data display unit.

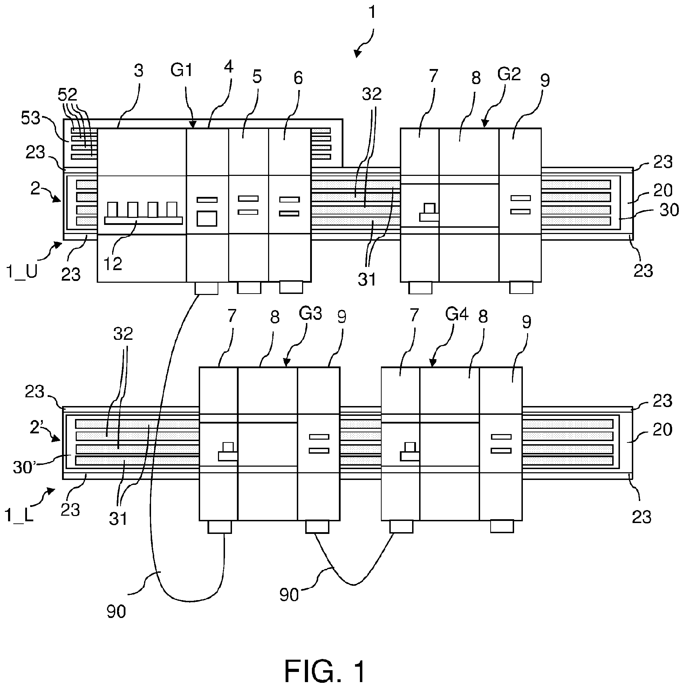

In the particular example in figure 1, the three-phase modular circuit breakers 3 is for example a general protection device controlled via a manual control lever 12 which allows an operator to manually turn on or off the modular circuit breakers 3, for example, to connect and disconnect the load network from the electric power distribution network. The single-phase modular circuit breakers 8 fixed to the upper mounting rail 2 is instead operatively connected downstream of the three-phase modular circuit breakers 3 and represents a protection device of one of the three phases protected by the three-phase modular circuit breakers 3, according to an unifilar electrical scheme.

In the example, the first plurality of modular electrical apparatuses 3-9 fixed to the upper mounting rail 2 also comprises: an auxiliary modular device 4 adapted to detect the on /off status of the three-phase modular circuit breakers 3, an auxiliary network communication interface 5, an auxiliary modular power supply apparatus 6 adapted to power some or all of the remaining modular electrical apparatuses with a DC voltage, an auxiliary motorized modular apparatus 7 adapted to automatically re-arm the single-phase modular circuit breakers 8, an auxiliary modular apparatus 9 adapted to detect the on /off status of the single-phase modular circuit breakers 8. According to one embodiment, the auxiliary motorized modular apparatus 7 is constructed according to the teachings of European patent application EP2383766A1.

The modular three-phase circuit breaker 3 and preferably, but not in a limiting manner, the auxiliary power supply apparatus 6 are connected to an AC power supply network (for example an electric power distribution network), preferably at low voltage, for example by means of a group of parallel conductive electric power distribution bars 52. For example, the three-phase modular circuit breakers 3 and the auxiliary modular power supply apparatus 6 are electrically connected to the parallel conductive bars 52 by means of a fast coupling system, of the type described in European patent EP2104193B1. For example, the parallel conductive bars 52 are fixed to a support structure 53 made of insulating material coupled to the mounting rail 2. For example, the support structure 53 is hooked to a fastening wall 14 of the mounting rail 2. To simplify the drawings, the group of parallel conductive bars 52 and the support structure 53 have been represented only in figure 1, such elements also being optional given that the connection of the three-phase modular circuit breaker 3 and of the auxiliary modular power supply apparatus 6 to the electric power distribution network can be achieved by alternative methods, for example according to the teachings of European patent EP0798835A1 or of European patent EP0434964B1. It is clear that the modular circuit breakers 3,8 having to establish and selectively interrupt a connection between the electric power distribution network and the load networks according to an electrical scheme which in the example is unifilar, are also electrically connected to each other and that the single-phase modular circuit breaker 8 is connected to a respective load network, but this can be achieved in the manner known per se to a person skilled in the art, for example by providing screw connection terminals in the modular circuit breakers 3,8, reason for which this aspect will not be described in greater detail herein.

For example, it can be assumed that the modular electrical apparatuses 3-6 fixed to the upper mounting rail 2 form a first group G1 of modular electrical apparatuses, and that the modular electrical apparatuses 7-9 fixed to the upper mounting rail 2 form a second group G2 of modular electrical apparatuses. The group G1 in an unifilar electrical scheme is placed to protect a three-phase line and is thus defined as a three-phase group G1, while the group G2 is placed to protect only one of the phase lines downstream of the three-phase group G1 and is thus defined as a single-phase group G2. It is also to be noted that, since the auxiliary modular network communication apparatus 5 and the auxiliary power supply unit 6 may in theory be common to all the modular electrical apparatuses of an electrical board, such auxiliary modular apparatuses 5, 6 do not need to belong to the group G1 because they could belong to any other group of the electrical board, for example to the G2 group, or may not belong to any of the groups G1, G2 because, as will be explained further below, one of such apparatuses, preferably the auxiliary modular network communication apparatus 5, can be used to define a higher-order group which comprises various groups G1, G2 of the type described above.

Preferably, the upper mounting rail 2 comprises a profile, for example a metal profile, preferably of aluminium, having a bottom wall 20 and two side walls 21 connected to the bottom wall 20 and such as to define together with the bottom wall 20 a recessed channel 22 of the mounting rail 2. Preferably the aforesaid profile is hat-shaped. The profile comprises two fastening bands 23, each of which is joined to a respective side wall 21 and which together define a mounting rail of the modular electrical apparatuses 3-9, i.e. a rail to which the modular electrical apparatuses 3-9 can be coupled.

The modular electrical apparatuses 3-9 comprise a housing 17, for example of electrically insulating material, preferably made of plastic, and can be hooked to the upper mounting rail 2. For this purpose, the modular electrical apparatuses 3-9 are fitted with hooking elements to the rail 19 coupled to the housing 17 and adapted to engage with the mounting track of the upper mounting rail 2 consisting of the two attachment bands 23. For example, the hooking elements to the rail 19 are for each modular electrical apparatus 3-9 two opposite coupling teeth 19 placed at opposite ends of two sliders 15 slidingly constrained to a back face 16 of the housing 17. Back face 16 is taken to mean a face of the housing 17 of the modular electrical apparatuses 3-9 which in an installation configuration is facing the mounting rail 2 and is opposite a front face 16' of the housing 17, which in such installation configuration is instead facing an operator. For example, the aforementioned teeth coupling to the rail 19 and the aforesaid sliders 15 are part of a coupling device to the rail as described in European patent EP2003754B1.

The upper mounting rail 2 comprises an interconnection bus 30 and preferably also a support device 40 of the interconnection bus 30 adapted to attach the interconnection bus 30 to the upper mounting rail 2. For the purposes of the present description an interconnection bus 30 is understood to be a data communication bus that may have as an option, in addition to data communication capabilities, also the function of being a DC power supply of the modular electrical apparatuses connected to it.

The interconnection bus 30 comprises a plurality of electric lines 31, 32 parallel to each other. Such electric lines 31, 32 are for example electrically conductive lines placed on, or integrated in, a support 33 in electrically insulating material.

In the example, the interconnection bus 30 comprises the following electric lines: a pair of DC power supply lines 31 and a pair of data communication lines 32. Preferably the DC power supply lines 31 are the outermost lines while the data supply lines are the innermost lines. The DC power supply lines 31 are, for example, powered by a DC voltage, such as a SELV (Safety Extra Low Voltage) or PELV (Protected Extra Low Voltage)voltage, designed to provide power to the auxiliary modular electric apparatuses 4-5, 7, 9. In general the modular circuit breakers 3, 8 do not require a power supply voltage supplied via the interconnection bus 30 since, if such modular circuit breakers 3,8 are electromechanical circuit breakers, they do not require a continuous power supply voltage while, if such modular circuit breakers 3, 8 are electronic circuit breakers, they may include within them voltage regulators adapted to obtain a continuous DC voltage starting from the AC voltage supplied by the parallel conductive distribution bars 52 of AC voltage electric power. However this does not rule out that if the modular circuit breakers 3, 8 require a DC supply voltage they can be connected to the DC power supply lines 31 of the interconnection bus 30. As already partially anticipated, it is also possible to provide that, while some auxiliary electrical apparatuses 4-5,7,9 are connected to the DC electric power supply lines 31 of the interconnection bus 30 to be powered, there is also at least one auxiliary modular apparatus 6 for powering the DC electric power supply lines 31 of the interconnection bus 30, for example by converting, using a voltage regulator circuit, an alternating voltage withdrawn by the parallel conductive distribution bars 52 of the electric power distribution, into a direct voltage, for example in a SELV or PELV voltage. Clearly, in an alternative embodiment, the auxiliary modular device power supply apparatus 6 can be connected to another source of AC voltage instead of the parallel conductive bars 52.

The data communication lines 32 of the interconnection bus 30 are electric lines by means of which, using a communication protocol, it is possible to realize an exchange of data between modular electrical apparatuses 3-9. The data communication lines 32 thus make it possible to realize a shared data communication channel between the modular electrical apparatuses 3-9 fixed to the upper mounting rail 2. For simplicity in this case it will be assumed, without thereby introducing any limitation, that all the modular electrical apparatuses 3-9 are connected to the data communication lines 32 of the interconnection bus 30. However, it is possible to provide that only some of the modular electrical apparatuses 3-9 are connected to the interconnection bus 30, for example, only the auxiliary modular apparatuses 4-6,7,9.

The above-mentioned shared data communication channel can be used for the exchange of data between the modular electrical apparatuses 3-9 and/or to allow the modular electrical apparatuses 3-5, 6-9 to communicate only with the auxiliary modular electrical network interface apparatus 5, for example to transmit signals over a distance with status information and/or in order to receive remote signals with control information. In this case, for example, the auxiliary modular electrical network interface apparatus 5 is a network interface device which for example can be connected to a local network, for example a Modbus network to ensure the network connection of the other modular electrical apparatuses 3, 4, 6, 7-9 connected to the data communication lines 32 of the interconnection bus 30.

With reference to Figure 1, in the particular non-limiting example shown, the modular system 1 for the control and/or the distribution of electric power further comprises a second plurality of modular electrical apparatuses 7-9 fixed to the lower mounting rail 2', for example entirely identical to the modular electrical apparatuses 7-9 fixed to the upper mounting rail 2 already described above. It can be assumed that the first three modular electrical apparatuses 7-9 fixed to the lower mounting rail 2' shown in the left of figure 1 form a single-phase group G3 and that the remaining three modular electrical apparatuses 7-9 fixed to the lower mounting rail 2' form a single phase group G4. The G3 and G4 single-phase groups in the example are functionally identical to the single-phase group G2 and for this reason are each placed to protect a respective phase line downstream of the three-phase group G1.

Again with reference to figure 1 a division of the modular system 1 into two modular subsystems and in particular into a lower subsystem 1_L and an upper subsystem 1_U was imagined. In the example of Figure 1, this division does not represent a functional division but a physical division performed with reference to the mounting rail 2,2' to which the modular electrical apparatuses 3-9 are fixed.

With reference to the drawings 2-5 the general characteristics of the modular electrical apparatuses 3-9 will now be described, describing for example only the auxiliary modular electric apparatus 4, on the understanding that the remaining modular electrical apparatuses may exhibit such features.

According to a preferred, non-limiting embodiment, to establish a direct connection of the auxiliary modular electrical apparatus 4 to the interconnection bus 30 such apparatus 4 is provided with a first interface connection 60 comprising a plurality of elastic conductive contact elements 65 each of which, when the auxiliary modular electrical apparatus 4 is hooked to the mounting rail 2, is such as to interfere in abutment with a respective electric power line 31, 32 of the interconnection bus 30. The elasticity of the elastic contact elements 65 allows a stable electrical contact between each element 65 and a respective conductive line 31,32 of the interconnection bus 30, when the auxiliary modular electric apparatus 4 is hooked to the mounting rail 2, clearly in the case where the interconnection bus 30 is present in the rail 2 at the fixing position of the electric apparatus 4. For the purposes of the present description, the term elastic conductive contact elements 65 covers both electrically conductive contact elements which are elastically flexible such as for example metal sheets, and rigid electrically conductive contact elements which are subject to the force of an elastic system, such as for example the pins sliding between an advanced position and a retracted position which in an absence of external forces are kept in the advanced position by at least one elastic element.

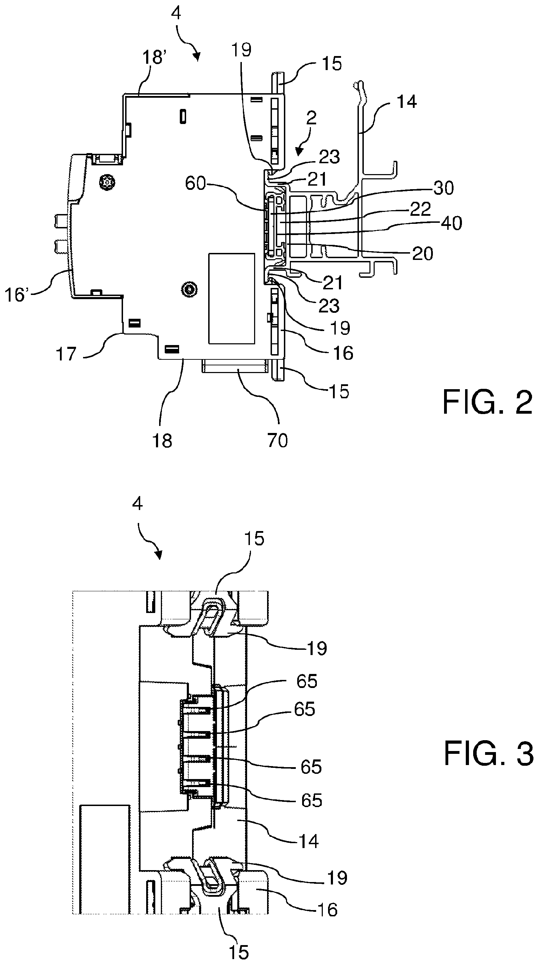

In the particular example of figures 2-4, the auxiliary modular electrical device 4 comprises, without thereby introducing any limitation, four elastic conductive contact elements 65 provided for the connection of the auxiliary modular electrical apparatus 4 to the interconnection bus 30. Preferably, the housing 17 of the auxiliary modular electrical apparatus 4 has a rear face 16 which comprises a recessed portion adapted to partially receive the mounting track of the mounting rail 2. The elastic conductive contact elements 65 protrude from the rear face 16 of the housing 17 towards the interconnection bus 30 when the auxiliary modular electrical apparatus 4 is hooked to the mounting rail 2.

Preferably, as shown in Figures 2 and 3, the elastic conductive contact elements 65 are interposed between the coupling elements to the rail 19 coupled to the housing 17 which are adapted to engage with the mounting track of the rail 2.

According to an advantageous but non-limiting embodiment, the auxiliary modular electrical apparatus 4 further comprises a second connection interface 70 connected in parallel to the first connection interface 60. For example, the second connection interface 70 comprises a plurality of electric terminals 75 each of which is electrically connected to a respective elastic conductive contact element 65 of the first connection interface 60. To realize the parallel connection, the electrical connection is for example such that each electric terminal 75 is electrically connected to a respective elastic conductive contact element 65 so that the electric terminal 75 and the respective elastic conductive contact element 65 are at the same potential.

According to one embodiment, the second connection interface 70 comprises at least a connector connected in parallel to the first connection interface 60. For example, said connector is a connector socket (preferably multi-polar and in the example four-pole) adapted to be connected to a male conjugate connector 80 attached to one end of an electric connection cable 90. This way, with reference to Figure 1, it is for example possible to connect together two modular electrical apparatuses 4,7 via a connection cable 90 provided with two male connectors 80 at opposite ends of the connection cable, for example multi-polar, to connect the interconnection bus 30 of the upper rail 2 to the interconnection bus 30' of the lower rail 2' and allow electrical apparatuses hooked to separate mounting rails 2,2' to be connected to the same logic bus 30, 30' resulting from the interconnection of two physically distinct and spatially distanced buses 30, 30'.

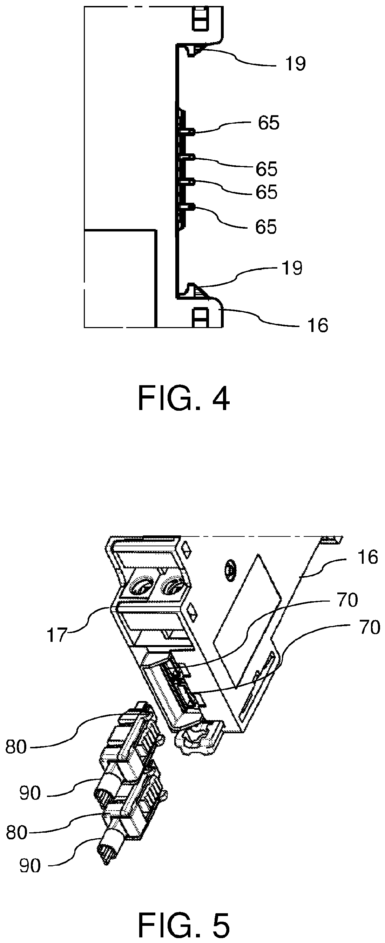

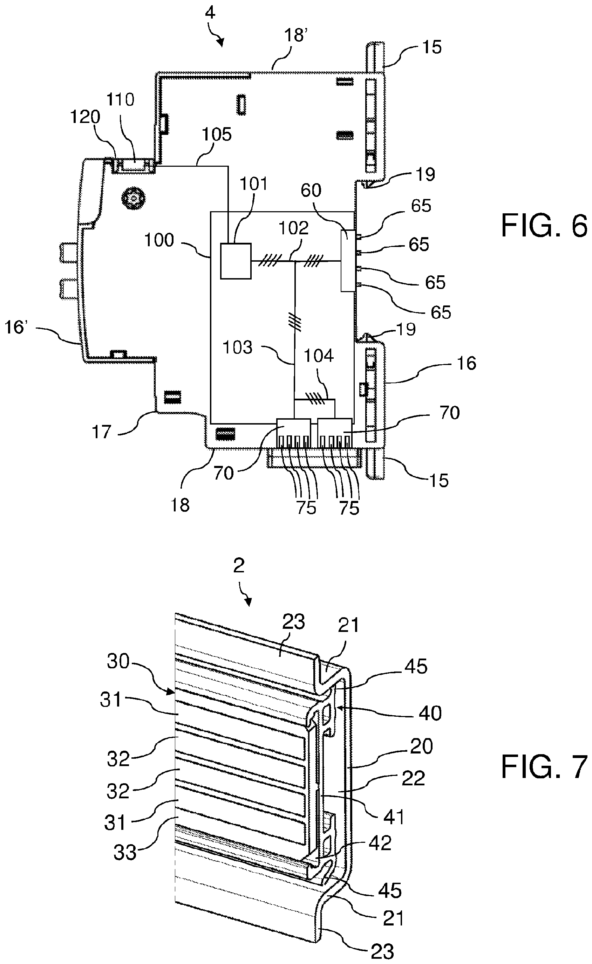

According to an advantageous embodiment, as shown in Figures 5 and 6, the second connection interface 70 is a double connection interface. In the example the second connection interface 70 in fact comprises two separate connectors connected in parallel to the first connection interface 60 and thus connected in parallel to each other.

According to one embodiment, the first connection interface 60 is accessible from the outside through a first face of the housing 17 of the modular auxiliary electrical device 4 and the second connection interface 70 is accessible from the outside through a second face of the housing 17. The first face is the rear face 16 of the housing while the second face is the bottom face 18 (as in the example shown in the drawings) or the upper face 18', or the front face 16'.

Figure 6 shows an embodiment of a non-limiting example of a simplified wiring diagram of the auxiliary modular electrical apparatus 4. Inside the housing 17, said apparatus 4 comprises a printed circuit board 100, with an electronic circuit 101 configured and/or programmed to enable the modular electric apparatus 4 to perform the functions required of such apparatus 4, together with any additional components such as sensors, electromechanical devices of the type known per se and therefore not described in greater detail. The electronic circuit 101 comprises for example a microprocessor or a microcontroller. Preferably, the first connection interface 60 is connected to the electronic circuit 101 through a plurality of conductive lines 102 (in the example four conductive lines), so that the electronic circuit 101, and therefore the modular electrical apparatus 4, can be connected to the interconnection bus 30 when the modular electrical apparatus 4 is coupled to the mounting rail 2 and when the mounting rail 2 comprises an interconnection bus 30 behind the mounting position of the electrical apparatus 4 on the mounting rail 2. The second connection interface 70 comprises two connectors connected by a plurality of conductive lines 103 and a further plurality of conductive lines 104 to the plurality of conductive lines 102. In the example, each of the plurality of conductive lines 103, 104 comprises four conductive lines. This way, through the second connection interface 70 it is possible to connect the electrical apparatus 4 to a further modular electrical apparatus 7 or in, the non-limiting case in which the second connection interface 70 is a double connection interface, to two further modular electrical apparatuses.

With reference now to figure 7, as indicated above, according to a preferred embodiment, the mounting rail 2 comprises a support device 40 of the interconnection bus 30.

Preferably, such support device 40 is housed in the recessed channel 22 of the mounting rail 2 and comprises a support portion 41 adapted to support the interconnection bus 30 and at least one elastically deformable coupling portion 45, for example, deformable by compression, and adapted to be fitted into the recessed channel 22 of the mounting rail 2 to engage with at least one of the side walls 21 in the recessed channel 22. Preferably, the support device 40 of the bus 30 comprises two elastically deformable coupling portions 45 placed on opposite sides to each other with respect to the support portion 41.

According to an advantageous embodiment, the coupling portion 45 is made of a relatively elastic material and the support portion 41 is made of a relatively rigid material with respect to the aforesaid relatively more elastic material. This way, the support device 40 of the interconnection bus 30 has a certain structural rigidity making it possible to realize a stable support for the interconnection bus 30 and at the same time a certain elasticity, which allows a quick coupling of the interconnection bus 30 into the recessed channel 22 of the mounting rail 2.

According to an advantageous embodiment, the support portion 41 and the coupling portion 45 are made in one piece. Thus advantageously the number of components required is reduced.

Again with reference to figure 7 according to an advantageous embodiment, the coupling portion 45 comprises at least one flexible wing having a first end portion fixed to the support portion 41 and an opposite second free end portion. Again in the same example, the coupling portion 45 comprises two flexible wings arranged on opposite sides with respect to the support portion 41 of the support device 40.

In the embodiment of figure 7, the support portion 41 comprises a housing channel 42 having an open side and adapted to receive and retain the interconnection bus 30. For example, the interconnection bus 30 comprises a printed circuit board 33 having a plurality of electrically conductive lines 31,32 arranged on a face of the printed circuit board 33 so that they are exposed and accessible through said open side.

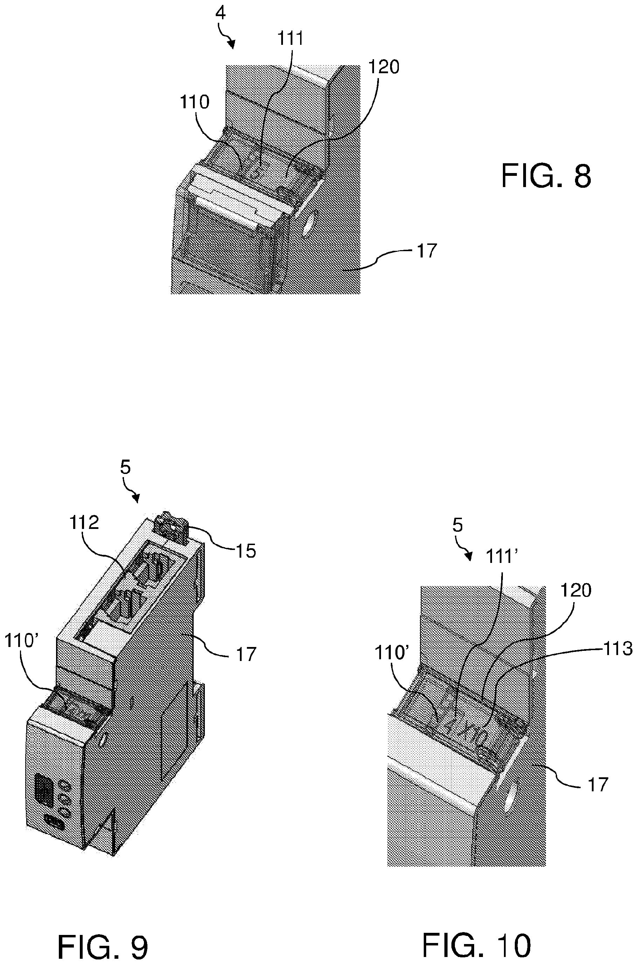

With reference to figure 8, the modular electrical apparatus 4 comprises a first selection device 110 placed on board the modular electrical apparatus 4 which allows an operator, for example an installer, to assign an address to said modular electrical apparatus 4, by acting locally on the modular electrical apparatus 4 and selecting the address from among a plurality of addresses assignable to the modular electrical apparatus 4. With reference to Figure 2 it may be observed that, preferably, the selection device 110 is operatively connected to the electronic circuit 101 of the modular electrical apparatus 4, in the example by means of an electrical connection 105.

In the particular example represented in the figures, the first selection device 110 is accessible from the front face 16' of the modular electrical apparatus 4 and in particular from a central protruding portion of such front face 16', called DIN front. According to a preferred embodiment, the housing 17 of the modular electrical apparatus 4 comprises a removable closing device 120, provided to selectively allow or prevent access to the first selection device 110. For example, according to a convenient embodiment, the closing device 120 comprises a door constrained to the housing 17 to allow the movement thereof between a closed position and an open position and vice versa. In the appended drawings the aforesaid door has always been represented in the closed position, in which it prevents manual access to the first selection device 110. The aforesaid door is for example made of transparent or translucent material. According to one embodiment, consistently with the example represented in the figures, the door is pivotally hinged to the housing 17. In an alternative embodiment the door is slidingly constrained to the housing 17.

Again with reference to figure 8 in the example the address marked with the number "5" has been selected for example from a plurality of addresses marked by respective numbers between "0" and "9" by means of the first selection device 110.

According to the invention, the first selection device 110 allows to set:
- a first operating mode that allows attribution in a forced way of said address selected from said plurality of addresses to said modular electrical apparatus 3-9 by acting locally on said first selection device 110; and
- a second operating mode selectable using the first selection device 110 alternative to the first operating mode, wherein the modular electrical apparatus 3-9 is such as to receive on board from an external configuration software, said address selected from among said plurality of addresses.

With reference to the example shown in figure 8, it may be hypothesized that by selecting with the selection device 110 any of the addresses marked by the number "1" to the number "9", a respective address on the interconnection bus 30 is assigned in a forced manner to the modular electrical apparatus 4. In this case, the selection device 110 sets the aforementioned first operating mode. Selecting instead a dedicated position to identify the second operating mode, for example the address marked with the number "0", the selection device 110 sets the aforementioned second operating mode, in which the address of modular electrical apparatus 4 is not forced but the apparatus is instead placed in a state in which it can receive the address from an external configuration software, such as a software enabling the design of complex systems of the type represented in figure 1.

According to one embodiment, the address assigned to the modular apparatus 3-9 via the first selection device 110 is a group address, i.e. a common address for a plurality of modular electrical apparatuses connected to the same shared interconnection bus 30. With reference to figures 1 and 8, for example, each of the electrical apparatuses 3-6 of the three-phase group G1 can be assigned the same address marked as number 5, acting on the respective selection devices 110 each predisposed on a modular electrical apparatus 3-6. In other words it may be hypothesised to assign each modular electrical apparatus 3-6 in the group G1 the address marked by the number "5". Similarly, each of the modular electrical apparatuses 7-9 of the group G2 can be assigned the address marked by the number "6", each of the modular electrical apparatuses 7-9 of the group G3 can be assigned the address marked by the number "7" and each of the modular electrical apparatuses 7-9 of the group G4 can be assigned the address marked by the number "8".

In each of the aforesaid groups G1, G2, G3 the plurality of modular electrical apparatuses belonging to the group form a logical group of modular electrical apparatuses having different functions within the logical group and which are associated to the electrical line or phase controlled by a single protection device 3, 8 (i.e. by a modular circuit breaker 3, 8) of said electrical line or phase belonging to the group. This way, even if the modular electrical apparatuses belonging to the same group have the same selected address, it is possible to advantageously avoid conflicts on the interconnection bus 30. This happens because within the same logical group there cannot be two modular electrical apparatuses of the same type (for example, there are not two actuators associated with the same modular circuit breaker 3,8, so it is possible to correctly, i.e. univocally address without conflict, the modular electrical apparatuses associating the selected address with an identification datum of the type of modular electrical apparatus. It is to be noted that in this case it is possible to address the modular electrical apparatuses 3-9 using a relatively small number of distinct addresses. According to a particularly preferred embodiment, the modular electrical apparatus 4 further comprises a second selection device, not shown in the drawings, which allows the modular electrical apparatus 4 to be assigned an apparatus type selected from among a plurality of types and the modular electrical apparatus 4 comprises on board a processing unit and programme memory comprising a plurality of programmes each associated to a respective apparatus type. This way it is advantageously possible to provide for selecting the type of modular electrical appliance, and therefore the specific function to be performed, with the second selection device and selecting the address with the first selection device 110 in the production phase of the modular apparatuses that are initially generic with regard to the function to be performed and which are then configured at the design and installation phase of the modular system 1. For example, the second selection device is a dip switch array accessible from a side face of the housing 17.

According to one embodiment, the second selection device is used to set:
- a first operating mode allowing the forced assignment of the modular electrical apparatus type (for example, without thereby introducing any limitation, from among the following types: actuator, meter, status detector, etc.) to the modular electrical apparatus 3-9, by acting locally on said second selection device.
- a second operating mode selectable using the second selection device alternative to the first operating mode, wherein the modular electrical apparatus 3-9 is such as to receive on board from an external configuration software, the setting of the type of modular apparatus (for example, without thereby introducing any limitation, from among the following types: actuator, meter, status detector, etc.);

With continued reference to figure 8 according to one embodiment the first selection device 110 comprises a manual control element movable between a plurality of operating positions, each corresponding to an address of said plurality of addresses assignable to the modular electrical apparatus 4. Preferably, the manual control element is a rotary switch operable, for example manually, from the outside of the housing 17.

According to an advantageous embodiment, the first selection device 110 comprises a display element 111 that displays the selected address, or data related to said address. For example it is to be noted that in Figure 8, the display element 111 displays the number "5", which corresponds to a given address on the bus 30. Preferably the display element 111 is a cylinder integral in rotation with the rotary selector having a plurality of graphic elements each identifying a respective address of said plurality of selectable addresses or of a respective datum correlated to said address. With reference to figures 9 and 10 it is to be noted that according to one embodiment, it is possible to provide in the modular system 1 a network interface device 5, which acts as a network interface device, and preferably also as a data concentrator device, for example with a control centre for example external to the electrical cabinet and for example remotely, comprising a further selection device 110' by means of which it is possible to define a higher-order address, such as a supra-group address which in the example is common to the groups G1-G4. For example, such additional selection device 110' is used to associate to the selected group addresses for the modular devices 3-9 a higher order group address. For example with reference to figures 9 and 10, it is to be noted that the network interface device 5 allows the assignment of a supra-group address to the groups G1-G4, so that the address of each modular apparatus in a network, for example according to the Modbus protocol, is obtained by forming a compound address in which a part of the address (for example a number in units of a decimal number system) is selected using the first selection device 110 of the modular apparatus 4 and a second part of the address (for example, a number in tens of a decimal number system) is selected via the selection device 110' of the network interface device 5. For example the overall address of the modular electrical apparatus 4 is in this case the address "45", in which the number "5" is selected directly via the modular electrical apparatus 4 and the number in tens "4" is selected via the network interface device 5. For this reason, the network interface device 5 shown in Figure 10 bears a graphical indication 113 "X10" specifically to indicate that the address selected by the selection device 110' relates to a number in tens of the compound address. Aside from the specific example described, it may be noted that in general the provision of a network interface device 5 makes it possible to realize a modular system 1 for the control and/or distribution of electric power comprising at least a first modular electrical apparatus 4 and a second modular electrical apparatus 5 adapted to act as a network interface for the connection of the first modular electrical apparatus 4 to a control centre, wherein the further modular electrical apparatus 5 comprises a further selection device 110', the address of the first modular electrical apparatus 4 in the network being a compound address in which a part of the compound address is selected by means of the first selection device 110 and a second part of the compound address is selected by means of the second selection device 110'.

With reference to Figure 9, the network interface modular apparatus 5 can be equipped for example with a network connection interface 112, which in this example is represented by a double RJ45 connector for the network connection for example using the Modbus protocol. Clearly, in addition to said network connection interface 112 the modular apparatus 5 can be provided with the aforementioned first connection interface 60 to the interconnection bus 30 and possibly also with the aforementioned second connection interface 70. While the network connection interface 112 allows for example the connection to a control centre, for example remotely, the first and the second connection interfaces 60, 70 represent local connection interfaces to the interconnection bus 30 and to other modular electrical apparatuses of the modular system 1.

From the above description it is evident that the modular electrical apparatus proposed makes it possible to fully achieve the intended purposes in terms of overcoming the drawbacks of the prior art. In fact, the aforesaid modular electrical apparatus allows increased performance in terms of flexibility and ease of installation of systems for the control and/or the distribution of electric power. In fact, it is to be observed that the assignment of addresses can be simple and intuitive in the configuration phase of the modular system 1 and it is possible to manage a system having a number of modules to the order of a hundred with a relatively small number of addresses.

Without prejudice to the principle of the invention, the embodiments and construction details may be varied widely with respect to what has been described and illustrated purely by way of a non-limiting example, without thereby departing from the scope of the invention as defined in the appended claims. The invention is defined by the features of the independent claim 1. Preferred embodiments are defined in the dependent claims.

## Claims

1. Modular electrical apparatus (3-9) for the control and/or distribution of electric power, comprising:
- a housing (17) that can be hooked to a mounting rail (2) ;
- at least one connection interface (60, 70) adapted to connect the modular electrical apparatus (3-9) to an interconnection bus (30) shared by a plurality of modular electrical apparatuses (3-9);
- a first selection device (110) placed on board the modular electrical apparatus (3-9) that allows the assignment of an address to said modular electrical apparatus (3-9), by acting locally on the modular electrical apparatus (3-9) and selecting the address from among a plurality of addresses assignable to the apparatus (3-9);
**characterised in that** the first selection device (110) allows to select:
- a first operating mode that allows the forced assignment of said address selected from said plurality of addresses to said modular electrical apparatus (3-9), by acting locally on the first selection device (110), and
- a second operating mode selectable using the first selection device (110) alternative to the first operating mode, wherein such modular electrical apparatus (3-9) is such as to receive on board from an external configuration software said address selected from among said plurality of addresses.

2. Modular electrical apparatus (3-9) according to claim 1, wherein said address is a group address common to a plurality of modular electrical apparatuses (3-9) connectable to the same shared interconnection bus (30).

3. Modular electrical apparatus (3-9) according to claim 2, wherein the plurality of modular electrical apparatuses (3-9) form a logical group (G1-G4) of modular electrical apparatuses (3-9) having different functions within the logical group and that are associated to the same electrical line or phase controlled by a single protection device (3, 8) of said electrical line or phase belonging to the group.

4. Modular electrical apparatus (3-9) according to claim 3, wherein said protection device is a circuit breaker.

5. Modular electrical apparatus (3-9) according to any one of the preceding claims, further comprising a second selection device making it possible to assign to the modular electrical apparatus (3-9) a device type selected from among a plurality of types, wherein the modular electrical apparatus (3-9) comprises on board a processing unit and programme memory comprising a plurality of programmes each associated to a respective type.

6. Modular electrical apparatus according to claim 5, wherein the second selection device is used to set:
- a first operating mode allowing the forced assignment of the modular electrical apparatus type to the modular electrical apparatus (3-9), by acting locally on the second selection device; and
- a second operating mode selectable using the second selection device alternative to the first operating mode, wherein the modular electrical apparatus (3-9) is such as to receive on board from an external configuration software, the setting of the type of modular appliance.

7. Modular electrical apparatus (3-9) according to any one of the preceding claims, wherein the first selection device (110) comprises a manual control element movable between a plurality of operating positions, each corresponding to an address of said plurality of addresses assignable to the modular electrical apparatus (3-9).

8. Modular electrical apparatus (3-9) according to claim 7, wherein the manual control element is a rotary selector operable from outside said housing (17).

9. Modular electrical apparatus (3-9) according to any one of the preceding claims, wherein the first selection device (110) comprises a display element (11) which displays the address selected or a datum correlated to said address.

10. Modular electrical apparatus (3-11, 5' -7') according to claims 8 and 9, wherein the display element (111) is a cylinder integral in rotation with the rotary selector having a plurality of graphic elements each identifying a respective address of said plurality or of a datum correlated to such respective address.

11. Modular electrical apparatus (3-9) according to claim 7, wherein the manual control element is adapted to be moved into a further operating position with respect to said plurality of operating positions and when the manual control element is located in any of said plurality of operating positions, the first selection device (110) is in the first operating mode for the forced and manual assignment of an address while, when the manual control element is in said further operating position, the first selection device(110) is in the second operating mode for an automatic assignment of said address by means of a configuration software.

12. Modular electrical apparatus (3-9) according to any one of the preceding claims, wherein said modular electrical apparatus is an auxiliary electrical apparatus associable to at least one modular circuit breaker (3,9) that can be hooked to a mounting rail (2, 2').

13. Modular system (1) for the control and/or distribution of electric power comprising at least a first modular electrical apparatus (4) according to any one of the preceding claims and a second modular electrical apparatus (5) adapted to act as a network interface for the connection of the first modular electrical apparatus (4) to a control centre, wherein the further modular electrical apparatus (5) comprises a further selection device (110'), the address of the first modular electrical apparatus (4) in the network being a compound address in which a part of the compound address is selected by means of the first selection device (110) and a second part of the compound address is selected by means of the second selection device (110').

14. Modular system (1) for the control and/or distribution of electric power comprising at least a first modular electrical apparatus (3-9) according to any one of claims 1 to 12 and a mounting rail (2, 2') comprising a profile having a bottom wall (20) and two side walls (21) connected to the bottom wall (20) and such as to delimit together with the bottom wall (20) a recessed channel (22) of the mounting rail (2, 2'), wherein the mounting rail (2, 2') comprises an interconnection bus (30) housed inside the recessed channel (22) and wherein the modular electrical apparatus (3-9) is connected to said shared communication bus (30) by means of said connection interface (60).

## Patentansprüche

1. Modulare elektrische Vorrichtung (3-9) zur Steuerung und/oder Verteilung elektrischer Energie, umfassend:
- ein Gehäuse (17), das an eine Tragschiene (2) angeschlossen werden kann;
- mindestens eine Verbindungsschnittstelle (60, 70), die dazu angepasst ist, die modulare elektrische Vorrichtung (3-9) mit einem Verbindungsbus (30) zu verbinden, der von mehreren modularen elektrischen Vorrichtungen (3-9) gemeinsam genutzt wird;
- eine erste Auswahlvorrichtung (110), welche an Bord der modularen elektrischen Vorrichtung (3-9) angeordnet ist und welche die Zuweisung einer Adresse an die genannte modulare elektrische Vorrichtung (3-9) ermöglicht, indem sie lokal auf die modulare elektrische Vorrichtung (3-9) einwirkt und die Adresse aus mehreren Adressen, die der Vorrichtung (3-9) zugewiesen werden können, auswählt;
**dadurch gekennzeichnet, dass** über die erste Auswahlvorrichtung (110) Folgendes ausgewählt werden kann:
- einen ersten Betriebsmodus, der die erzwungene Zuweisung der genannten Adresse, ausgewählt aus den genannten mehreren, an die genannte modulare elektrische Vorrichtung (3-9) ermöglicht, indem dieser lokal auf die erste Auswahlvorrichtung (110) einwirkt, und
- einen zweiten Betriebsmodus, der unter Verwendung der ersten Auswahlvorrichtung (110) als Alternative zum ersten Betriebsmodus auswählbar ist, wobei eine solche modulare elektrische Vorrichtung (3-9) derart gestaltet ist, dass sie von einer externen Konfigurationssoftware diejenige Adresse an Bord empfängt, die aus den genannten mehreren Adressen ausgewählt ist.

2. Modulare elektrische Vorrichtung (3-9) nach Anspruch 1, wobei die genannte Adresse eine Gruppenadresse ist, die mehreren modularen elektrischen Vorrichtungen (3-9) gemeinsam ist, die mit demselben gemeinsamen Verbindungsbus (30) verbunden werden können.

3. Modulare elektrische Vorrichtung (3-9) nach Anspruch 2, wobei die mehreren modularen elektrischen Vorrichtungen (3-9) eine logische Gruppe (G1-G4) von modularen elektrischen Vorrichtungen (3-9) mit unterschiedlichen Funktionen innerhalb der logischen Gruppe bilden und die derselben elektrischen Leitung oder Phase zugeordnet sind, die von einer einzelnen Schutzvorrichtung (3, 8) der zur Gruppe gehörenden elektrischen Leitung oder Phase gesteuert wird.

4. Modulare elektrische Vorrichtung (3-9) nach Anspruch 3, wobei die genannte Schutzvorrichtung ein Schutzschalter ist.

5. Modulare elektrische Vorrichtung (3-9) nach einem der vorhergehenden Ansprüche, ferner umfassend eine zweite Auswahlvorrichtung, die es ermöglicht, der modularen elektrischen Vorrichtung (3-9) einen Vorrichtungstyp zuzuweisen, der aus mehreren Typen ausgewählt ist, wobei die modulare elektrische Vorrichtung (3-9) eine Verarbeitungseinheit und einen Programmspeicher an Bord umfasst, wobei Letzterer mehrere Programme umfasst, die jeweils einem jeweiligen Typ zugeordnet sind.

6. Modulare elektrische Vorrichtung nach Anspruch 5, wobei die zweite Auswahlvorrichtung dazu verwendet wird, um Folgendes einzustellen:
- einen ersten Betriebsmodus, der die erzwungene Zuweisung des Typs der modularen elektrischen Vorrichtung an die modulare elektrische Vorrichtung (3-9) ermöglicht, indem dieser lokal auf die zweite Auswahlvorrichtung einwirkt; und
- einen zweiten Betriebsmodus, der unter Verwendung der zweiten Auswahlvorrichtung als Alternative zum ersten Betriebsmodus auswählbar ist, wobei die modulare elektrische Vorrichtung (3-9) derart gestaltet ist, dass sie von einer externen Konfigurationssoftware die Einstellung des Typs der modularen Vorrichtung an Bord empfängt.

7. Modulare elektrische Vorrichtung (3-9) nach einem der vorhergehenden Ansprüche, wobei die erste Auswahlvorrichtung (110) ein Handsteuerelement umfasst, das zwischen mehreren Betriebspositionen beweglich ist, wobei jede von diesen einer Adresse der genannten mehreren Adressen, die der modularen elektrischen Vorrichtung (3-9) zugewiesen werden können, entspricht.

8. Modulare elektrische Vorrichtung (3-9) nach Anspruch 7, wobei das Handsteuerelement ein Drehwahlschalter ist, der von außerhalb des genannten Gehäuses (17) betätigt werden kann.

9. Modulare elektrische Vorrichtung (3-9) nach einem der vorhergehenden Ansprüche, wobei die erste Auswahlvorrichtung (110) ein Anzeigeelement (11) umfasst, das die ausgewählte Adresse oder ein mit dieser Adresse korreliertes Datum anzeigt.

10. Modulare elektrische Vorrichtung (3-11, 5'-7') nach den Ansprüchen 8 und 9, wobei das Anzeigeelement (111) ein mit dem Drehwahlschalter drehfest verbundener Zylinder ist, der mehrere graphische Elemente aufweist, die jeweils eine entsprechende Adresse der genannten mehreren oder ein mit dieser entsprechenden Adresse korreliertes Datum identifizieren.

11. Modulare elektrische Vorrichtung (3-9) nach Anspruch 7, wobei das Handsteuerelement dazu angepasst ist, um in eine weitere Betriebsposition in Bezug auf die genannten mehreren Betriebspositionen bewegt zu werden, und wenn sich das Handsteuerelement in irgendeiner der genannten mehreren Betriebspositionen befindet, befindet sich die erste Auswahlvorrichtung (110) in dem ersten Betriebsmodus zur erzwungenen und manuellen Zuweisung einer Adresse, während sich die erste Auswahlvorrichtung (110) in dem zweiten Betriebsmodus zur automatischen Zuweisung dieser Adresse mittels einer Konfigurationssoftware befindet, wenn sich das Handsteuerelement in dieser weiteren Betriebsposition befindet.

12. Modulare elektrische Vorrichtung (3-9) nach einem der vorhergehenden Ansprüche, wobei die genannte modulare elektrische Vorrichtung eine elektrische Hilfsvorrichtung ist, die mindestens einem modularen Schutzschalter (3,9) zugeordnet werden kann, der an eine Tragschiene (2, 2') angeschlossen werden kann.

13. Modulares System (1) zur Steuerung und/oder Verteilung elektrischer Energie, umfassend mindestens eine erste modulare elektrische Vorrichtung (4) nach einem der vorhergehenden Ansprüche und eine zweite modulare elektrische Vorrichtung (5), die so angepasst ist, dass sie als Netzwerkschnittstelle für die Verbindung der ersten modularen elektrischen Vorrichtung (4) mit einem Steuerzentrum fungiert, wobei die weitere modulare elektrische Vorrichtung (5) eine weitere Auswahlvorrichtung (110') umfasst und die Adresse der ersten modularen elektrischen Vorrichtung (4) im Netzwerk eine zusammengesetzte Adresse ist, wobei ein Teil der zusammengesetzten Adresse mittels der ersten Auswahlvorrichtung (110) ausgewählt wird und ein zweiter Teil der zusammengesetzten Adresse mittels der zweiten Auswahlvorrichtung (110') ausgewählt wird.

14. Modulares System (1) zur Steuerung und/oder Verteilung elektrischer Energie, umfassend mindestens eine erste modulare elektrische Vorrichtung (3-9) nach einem der Ansprüche 1 bis 12 und eine Tragschiene (2, 2') umfassend ein Profil mit einer Bodenwand (20) und zwei Seitenwänden (21), die mit der Bodenwand (20) derart verbunden sind, um zusammen mit der Bodenwand (20) einen vertieften Kanal (22) der Tragschiene (2, 2') abzugrenzen, wobei die Tragschiene (2, 2') einen Verbindungsbus (30) umfasst, der in dem vertieften Kanal (22) untergebracht ist, und wobei die modulare elektrische Vorrichtung (3-9) mit dem genannten gemeinsam genutzten Verbindungsbus (30) über die genannte Verbindungsschnittstelle verbunden ist (60).

## Revendications

1. Appareil électrique modulaire (3-9) pour la commande et/ou la distribution d'énergie électrique, comprenant :
- un boîtier (17) qui peut être accroché à un rail de montage (2) ;
- au moins une interface de connexion (60, 70) conçue pour connecter l'appareil électrique modulaire (3-9) à un bus d'interconnexion (30) partagé par une pluralité d'appareils électriques modulaires (3-9) ;
- un premier dispositif de sélection (110) placé à bord de l'appareil électrique modulaire (3-9) qui permet l'attribution d'une adresse audit appareil électrique modulaire (3-9), en agissant localement sur l'appareil électrique modulaire (3-9) et en sélectionnant l'adresse parmi une pluralité d'adresses attribuables à l'appareil (3-9) ;
**caractérisé en ce que** le premier dispositif de sélection (110) permet de sélectionner :
- un premier mode de fonctionnement qui permet l'attribution forcée de ladite adresse sélectionnée parmi ladite pluralité d'adresses audit appareil électrique modulaire (3-9), en agissant localement sur le premier dispositif de sélection (110) et
- un second mode de fonctionnement sélectionnable à l'aide du premier dispositif de sélection (110) en variante du premier mode de fonctionnement, dans lequel un tel appareil électrique modulaire (3-9) est tel qu'il reçoit à bord depuis un logiciel de configuration externe ladite adresse sélectionnée parmi ladite pluralité d'adresses.

2. Appareil électrique modulaire (3-9) selon la revendication 1, dans lequel ladite adresse est une adresse de groupe commune à une pluralité d'appareils électriques modulaires (3-9) pouvant être connectés au même bus d'interconnexion partagé (30).

3. Appareil électrique modulaire (3-9) selon la revendication 2, dans lequel la pluralité d'appareils électriques modulaires (3-9) forme un groupe logique (G1-G4) d'appareils électriques modulaires (3-9) ayant différentes fonctions au sein du groupe logique et qui sont associés à la même ligne ou phase électrique commandée par un seul dispositif de protection (3, 8) de ladite ligne ou phase électrique appartenant au groupe.

4. Appareil électrique modulaire (3-9) selon la revendication 3, dans lequel ledit dispositif de protection est un disjoncteur.

5. Appareil électrique modulaire (3-9) selon l'une quelconque des revendications précédentes, comprenant en outre un second dispositif de sélection permettant d'attribuer à l'appareil électrique modulaire (3-9) un type de dispositif sélectionné parmi une pluralité de types, dans lequel l'appareil électrique modulaire (3-9) comprend à bord une unité de traitement et une mémoire de programme comprenant une pluralité de programmes associés chacun à un type respectif.

6. Appareil électrique modulaire selon la revendication 5, dans lequel le second dispositif de sélection est utilisé pour régler :
- un premier mode de fonctionnement permettant l'affectation forcée du type d'appareil électrique modulaire à l'appareil électrique modulaire (3-9), en agissant localement sur le second dispositif de sélection ; et
- un second mode de fonctionnement sélectionnable à l'aide du second dispositif de sélection en variante du premier mode de fonctionnement, dans lequel l'appareil électrique modulaire (3-9) est tel qu'il reçoit à bord, d'un logiciel de configuration externe, le réglage du type d'appareil modulaire.

7. Appareil électrique modulaire (3-9) selon l'une quelconque des revendications précédentes, dans lequel le premier dispositif de sélection (110) comprend un élément de commande manuelle mobile entre une pluralité de positions de fonctionnement, chacune correspondant à une adresse de ladite pluralité d'adresses attribuables à l'appareil électrique modulaire (3-9).

8. Appareil électrique modulaire (3-9) selon la revendication 7, dans lequel l'élément de commande manuelle est un sélecteur rotatif pouvant être actionné depuis l'extérieur dudit boîtier (17).

9. Appareil électrique modulaire (3-9) selon l'une quelconque des revendications précédentes, dans lequel le premier dispositif de sélection (110) comprend un élément d'affichage (11) qui affiche l'adresse sélectionnée ou une donnée corrélée à ladite adresse.

10. Appareil électrique modulaire (3-11, 5'-7') selon les revendications 8 et 9, dans lequel l'élément d'affichage (111) est un cylindre solidaire en rotation du sélecteur rotatif comportant une pluralité d'éléments graphiques identifiant chacun une adresse respective de ladite pluralité ou d'une donnée corrélée à une telle adresse respective.

11. Appareil électrique modulaire (3-9) selon la revendication 7, dans lequel l'élément de commande manuelle est conçu pour être déplacé dans une autre position de fonctionnement par rapport à ladite pluralité de positions de fonctionnement et lorsque l'élément de commande manuelle est situé dans l'une quelconque de ladite pluralité de positions de fonctionnement, le premier dispositif de sélection (110) est dans le premier mode de fonctionnement pour l'attribution forcée et manuelle d'une adresse tandis que, lorsque l'élément de commande manuelle est dans ladite autre position de fonctionnement, le premier dispositif de sélection (110) est dans le second mode de fonctionnement pour une attribution automatique de ladite adresse au moyen d'un logiciel de configuration.

12. Appareil électrique modulaire (3-9) selon l'une quelconque des revendications précédentes, dans lequel ledit appareil électrique modulaire est un appareil électrique auxiliaire pouvant être associé à au moins un disjoncteur modulaire (3, 9) qui peut être accroché à un rail de montage (2, 2').

13. Système modulaire (1) pour la commande et/ou la distribution d'énergie électrique comprenant au moins un premier appareil électrique modulaire (4) selon l'une quelconque des revendications précédentes et un second appareil électrique modulaire (5) conçu pour servir d'interface réseau pour la connexion du premier appareil électrique modulaire (4) à un centre de commande, dans lequel l'autre appareil électrique modulaire (5) comprend un autre dispositif de sélection (110'), l'adresse du premier appareil électrique modulaire (4) dans le réseau étant une adresse composée dans laquelle une partie de l'adresse composée est sélectionnée au moyen du premier dispositif de sélection (110) et une seconde partie de l'adresse composée est sélectionnée au moyen du second dispositif de sélection (110').

14. Système modulaire (1) pour la commande et/ou la distribution d'énergie électrique comprenant au moins un premier appareil électrique modulaire (3-9) selon l'une quelconque des revendications 1 à 12 et un rail de montage (2, 2') comprenant un profil ayant une paroi inférieure (20) et deux parois latérales (21) reliées à la paroi inférieure (20) et de manière à délimiter avec la paroi inférieure (20) un canal en retrait (22) du rail de montage (2, 2'), dans lequel le rail de montage (2, 2') comprend un bus d'interconnexion (30) logé à l'intérieur du canal en retrait (22) et dans lequel l'appareil électrique modulaire (3-9) est connecté audit bus de communication partagé (30) au moyen de ladite interface de connexion (60).
